# FASCICULE DE BREVET EUROPEEN

(11) **EP 1 941 514 B1**
(45) Date de publication et mention de la délivrance du brevet: **28.07.2010**
(21) Numéro de dépôt: 06807423.6
(22) Date de dépôt: 20.10.2006
(51) Int. Cl.: G21C 21/00, B65G 11/08, B65G 11/20, B65G 49/05, B65G 69/16, F27D 3/10

(54) **DISPOSITIF DE REMPLISSAGE DE NACELLE AVEC DES PASTILLES DE COMBUSTIBLE NUCLEAIRE ET PROCEDE DE REMPLISSAGE METTANT EN OEUVRE UN TEL DISPOSITIF**
EINRICHTUNG ZUM FÜLLEN EINES KORBS MIT KERNBRENNSTOFF-PELLETS UND DIE EINRICHTUNG VERWENDENDES FÜLLVERFAHREN
DEVICE FOR FILLING A NACELLE WITH NUCLEAR FUEL PELLETS AND A FILLING METHOD USING SAID DEVICE

(30) Priorité: 24.10.2005 FR 0553222
(43) Date de publication de la demande: 09.07.2008
(73) Titulaire: Areva NC, 75009 Paris (FR)
(72) Inventeur: PANDRAUD, Jean-Luc, F-30330 Cavillargues (FR); SANCHIS, Hervé, F-30133 Les Angles (FR)
(74) Mandataire: Poulin, Gérard
(86) Numéro de dépôt international: PCT/EP2006/067599
(87) Numéro de publication internationale: WO 2007/048751

(56) Documents cités:
- EP-A- 0 002 875
- EP-A- 0 300 246
- EP-A- 0 385 195
- FR-A- 2 764 585
- GB-A- 2 197 290
- US-A- 4 332 120
- US-A- 4 570 419

## Description

### DOMAINE TECHNIQUE ET ART ANTÉRIEUR

La présente invention se rapporte principalement à un dispositif de remplissage de nacelle avec des pastilles de combustible nucléaire et à un procédé de remplissage mettant en oeuvre un tel dispositif.

Les pastilles de combustible nucléaire sont réalisées à partir d'un mélange de poudre de combustible nucléaire, par exemple une poudre de MOX (un mélange d'oxyde de plutonium et d'oxyde d'uranium). Cette poudre est pressée dans une presse sous la forme de pastilles cylindriques, qui sont ensuite frittées par passage à l'intérieur d'un four à très haute température sous atmosphère contrôlée. Après le frittage, les pastilles sont prêtes à être chargées dans des gaines pour former des crayons de combustible nucléaire.

Pour effectuer le frittage des pastilles, celles-ci sont chargées dans des paniers, également appelés nacelles, disposés sur des sabots ; un train de sabot est ensuite déplacé à l'intérieur du four de frittage. Or, ces pastilles, avant le frittage, sont très fragiles et très fiables, elles doivent donc être manipulées avec précaution afin de réduire l'apparition de brisures ou éclats de pastilles et également afin d'éviter d'endommager ces pastilles puisque leur taille doit être bien maîtrisée pour assurer un fonctionnement efficace et sûr des réacteurs nucléaires. Cela impose donc que le dispositif de chargement des nacelles avec les pastilles de combustible nucléaire assure un chargement sans choc, ou pour le moins avec des chocs réduits.

Il est connu par exemple du document EP-0 385 195, un dispositif de remplissage de nacelle avec des pastilles de combustible nucléaire comportant un bec de remplissage disposé à l'extrémité d'un moyen d'alimentation en pastille, ce bec comportant une extrémité inférieure destinée à être disposée à proximité de la nacelle et comportant également une succession de bavettes en matériau souple destinées à ralentir la chute par gravité des pastilles. Or, l'alimentation du bec de remplissage s'effectue de manière continue, ainsi les pastilles se suivent dans le bec de remplissage et peuvent s'entrechoquer et provoquer leur détérioration.

Il est également connu du document FR 2 764 585, un dispositif de transport d'objet comportant un puits muni de lamelles fixes superposées; les lamelles sont recouverues d'un matériau amortissant, les lamelles amortissent la chute des objets dans le puits.

C'est par conséquent un but de la présente invention d'offrir un dispositif de remplissage de nacelle avec des pastilles de combustible nucléaire dans lequel les risques de détérioration des pastilles sont réduits.

C'est également un but de la présente invention d'offrir un dispositif de remplissage de nacelle avec des pastilles de combustible nucléaire permettant un remplissage sensiblement uniforme de la nacelle.

C'est également un but de la présente invention d'offrir un dispositif de conception et de fonctionnement simples.

### EXPOSE DE L'INVENTION

Les buts précédemment énoncés sont atteints par un dispositif de remplissage comportant un bec dont une extrémité inférieure est apte à être rapprochée et éloignée d'un fond de nacelle, de manière à mener les pastilles le plus prés possible de l'endroit où elles doivent être déposées, le bec de remplissage comportant également des systèmes de portes actionnées alternativement pour permette un acheminement des pastilles relativement peu chaotique.

La présente invention a principalement pour objet un dispositif, de remplissage de nacelle avec des pastilles de combustible nucléaire selon la revendication 1.

Dans un exemple de réalisation avantageux, le dispositif selon la présente invention comporte un moyen d'actionnement unique desdites portes.

Le moyen d'actionnement comporte, par exemple un vérin lié à la porte intermédiaire par un moyen de bielle.

De manière avabtageyse, la première porte et la troisième porte sont reliées par une barre d'accouplement et une des première ou troisième porte est connectée par un moyen d'engrenage à la deuxième porte.

Les portes sont avantageusement de forme sensiblement rectangulaire et comportent des frangés du côté d'un fond du bec.

Les portes sont réalisées, par exemple, en polyuréthane.

Le dispositif selon l'intention peut comporter de manière avantageuse une buvette souple à l'extrémité inférieure du bec. La bavette peut être réalisée en matériau silicone.

Le moyen d'alimentation est par exemple un tapis roulant.

Le dispositif selon la présente invention comporte, de manière avantageuse des moyens de déplacement de la nacelle relativement à l'extrémité inférieure du bec.

La présente invention a également pour objet un procédé de remplissage mettant en oeuvre un dispositif selon la présente invention, comportant :
- la mise en place de l'extrémité inférieure du bec au plus près du fond de la nacelle,
- la mise en route du moyen d'alimentation en pastilles,
- l'actionnement alternatif des portes,
- le relèvement de l'extrémité inférieure du bec en fonction de l'épaisseur des pastilles disposées dans la nacelle.

La nacelle peut être déplacée pendant le remplissage de manière à assurer un remplissage sensiblement en couche.

Le procédé de remplissage peut suivre le cycle suivant :
- une première couche de pastilles est réalisée à une position minimale de l'extrémité inférieure du bec,
- une deuxième couche de pastilles est réalisée à une position supérieure à la position minimale,
- une troisième et une quatrième couche sont réalisées à une position encore supérieure,
- une cinquième et une sixième couche sont réalisées à une position encore supérieure.

### BRÈVE DESCRIPTION DES DESSINS

La présente invention sera mieux comprise à l'aide de la description qui va suivre et des dessins en annexes, sur lesquels :
- la figure 1 est une vue de dessus en coupe partielle d'un dispositif de remplissage selon la présente invention,
- la figure 2 est une vue en coupe selon le plan de coupe AA du dispositif de la figure 1,
- la figure 3 est une vue en coupe selon le plan de coupe BB du dispositif de la figure 1,
- la figure 4 est une vue en plan d'un exemple de porte selon la présente invention,
- la figure 5 est une vue de côté du dispositif selon l'invention.

### EXPOSÉ DÉTAILLÉ DE MODES DE RÉALISATION PARTICULIERS

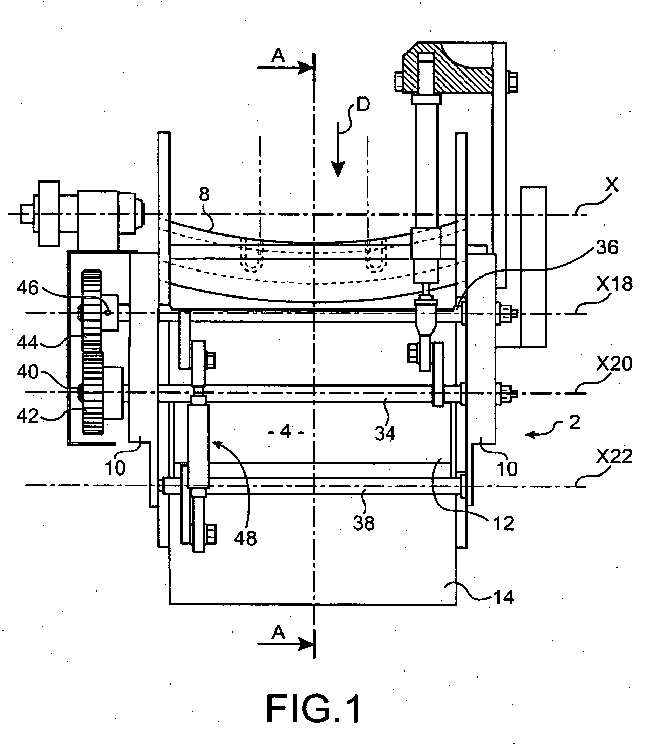

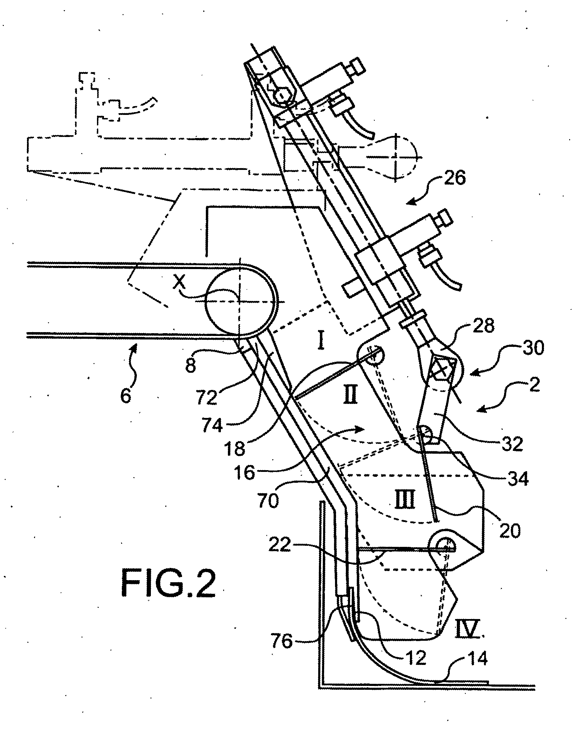

Sur les figures 1 et 2, on peut voir un dispositif de chargement de nacelle selon la présente invention, comportant un bec de remplissage 2 délimitant un chemin d'écoulement 4 pour les pastilles, alimenté par un moyen d'alimentation 6 amenant les pastilles à une extrémité supérieure 8 du bec d'alimentation 2. Le bec d'alimentation 2 comporte également deux flancs latéraux 10 délimitant latéralement le chemin d'écoulement 4 et s'étendant sensiblement de l'extrémité supérieure 8 du bec d'alimentation à une extrémité inférieure 12 du bec.

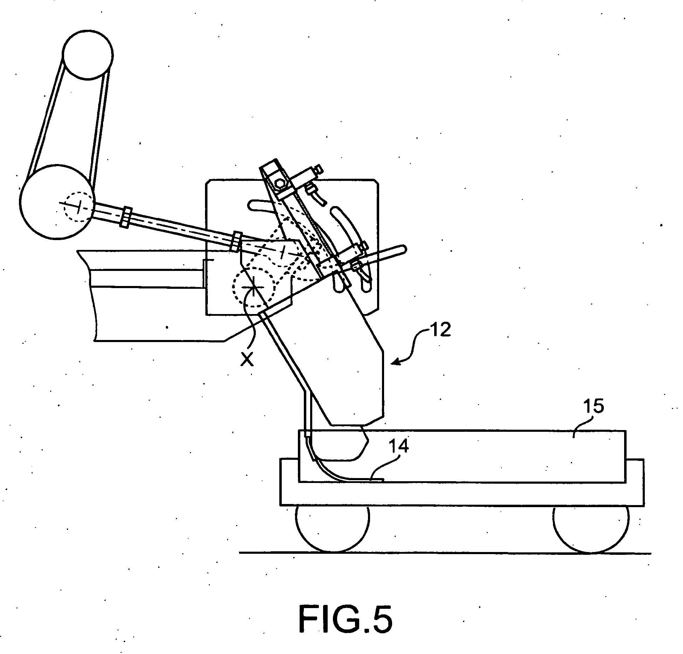

Le bec d'alimentation se prolonge avantageusement par une bavette 14 fixée à l'extrémité inférieure 12 du bec 2, cette bavette est destinée à venir lécher le fond d'une nacelle 15 représentée sur la figure 5, pour amortir la chute des pastilles.

Selon la présente invention, le bec d'alimentation est mobile en rotation autour d'un axe X transversal à la direction d'écoulement D indiquée par la flèche.

Selon la présente invention, le dispositif comporte également des moyens 16 pour fractionner l'écoulement des pastilles du dispositif d'alimentation 6 vers la nacelle afin de réduire leur vitesse et ainsi limiter les risques de détérioration desdites pastilles.

Ces moyens 16 sont formés, dans l'exemple représenté, par trois portes disposées les unes derrière les autres le long de la direction d'écoulement D. Les portes 18, 20, 22 sont mobiles en rotation respectivement autour des axes X18, X20, X22.

Les portes 18, 20, 22 sont de formes sensiblement rectangulaires et mobiles en rotation autour des axes X18, X20, X22 le long d'un des côtés de la porte, les axes X18, X20, X22 étant disposés à une distance déterminée du chemin d'écoulement 4 correspondant sensiblement à la hauteur des portes 18, 20, 22.

Les portes 18, 20, 22 sont ouvertes (fermées) alternativement pour faire passer une pastille d'un niveau I situé en amont de la porte 18 vers un niveau II délimité par les portes 18 et 20, puis vers un niveau III délimité par les portes 20 et 22 et enfin vers un niveau IV correspondant sensiblement à la nacelle. Ainsi, les pastilles sont acheminées en quatre étapes vers la nacelle et les risques de détérioration du fait de leur chute sont sensiblement réduits.

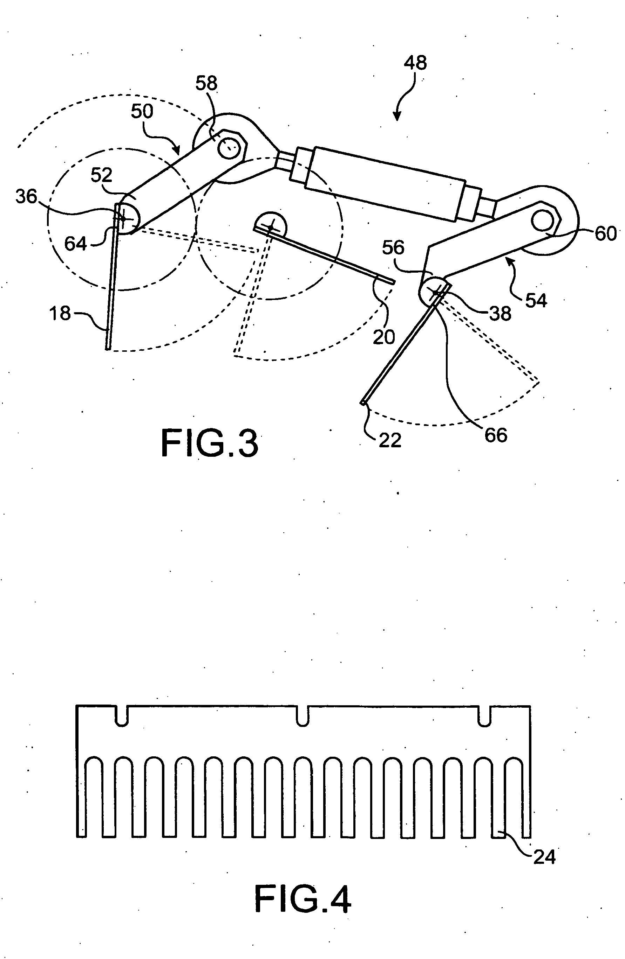

Les portes 18, 20, 22 sont avantageusement réalisées en un matériau souple, par exemple en polyuréthane. De plus, de manière avantageuse, en référence à la figure 4, les portes 18, 20, 22 comportent des franges 24 à leur extrémité inférieure destinées à lécher le chemin d'écoulement 4. Ces franges ralentissent encore davantage le mouvement des, pastilles aux passages des portes.

Dans l'exemple représenté, les portes 18 et 22 ont la même position, c'est-à-dire qu'elles sont simultanément ouvertes ou simultanément fermées, tandis que la porte 20 a une position inverse de celle des portes 18 et 22 c'est-à-dire qu'elle est ouverte lorsque les portes 18 et 22 sont fermées, et elle est fermée lorsque les portes 18 et 22 sont ouvertes.

Dans l'exemple représenté, l'actionnement des trois portes s'effectue par un mécanisme d'actionnement 26 unique permettant de simplifier le dispositif et d'avoir de manière sûre l'actionnement désiré. Mais on peut prévoir, par exemple un mécanisme d'actionnement séparé pour chacune des portes ou un mécanisme pour les portes 18 et 22 et un mécanisme pour la porte 20.

Le mécanisme d'actionnement 26 comporte, dans l'exemple représenté, un vérin hydraulique ou pneumatique qui est relié par une extrémité libre 28 à la porte 20 par un mécanisme de bielle 30, transformant ainsi le mouvement de translation du vérin 26 en un mouvement de rotation de la porte 20 autour de son axe X20.

Le mécanisme de bielle 30 est formé par une barre 32 fixée de manière mobile en rotation à l'extrémité 28 du vérin 26 et fixé de manière rigide sur une extrémité 34 supérieure de la porte 20.

La porte 20, comme on peut le voir sur la figure 1, est solidaire d'un axe 34 formant l'extrémité supérieure de la porte, qui est montée mobile en rotation dans les flancs latéraux 10 du bec d'alimentation.

Les portes 18 et 22 sont également solidaires d'un axe 36, 38 respectivement à leurs extrémités supérieures. Les axes 36, 38 sont montés mobiles en rotation par leurs extrémités longitudinales respectivement dans les flancs latéraux 10, 10 du bec d'alimentation.

De manière avantageuse, le déplacement de la porte 18 est couplé au déplacement de la porte 20 et le déplacement de la porte 18 est couplé au déplacement de la porte 22.

Comme on peut le voir sur la figure 1, le mécanisme de transmission de mouvement entre l'axe 34 de la porte 20 et l'axe 36 de la porte 18 est formé par un premier engrenage 42 solidaire en rotation d'une extrémité longitudinale 40 de l'arbre 34, en prise avec un deuxième engrenage 44 solidaire en rotation d'une extrémité 46 de l'arbre 36. Il est également prévu de régler la position des portes 18 et 20 de manière à ce que lorsque l'une est ouverte, l'autre soit fermée.

L'axe 36 et l'axe 38 sont liés par un bras d'accouplement 48 visible sur la figure 4, comportant un bras 50 lié en rotation par une première extrémité 52 à l'axe 36, un deuxième bras 54 lié en rotation par une première extrémité 56 à l'arbre 38. Les bras 50 et 54 comportent des extrémités longitudinales 58, 60 respectivement opposées aux extrémités longitudinales 52 et 56 et reliées par la barre 48, les extrémités 58 et 60 étant montées libres en rotation dans les extrémité longitudinales de là barre 48.

De manière avantageuse, la barre 48 est formée par un ridoir (non représenté) permettant d'ajuster la position relative des portes 18 et 22. Ainsi, comme on peut le voir sur la figure 3, les portes 18 et 22 ne sont pas, de manière avantageuse disposées parallèlement l'une par rapport à l'autre mais la porte 22 a une position plus reculée relativement à la position de la porte 18, ceci réduisant la course de la pastille dans l'espace délimité entre les portes 18 et 22, ce qui réduit les risques de détérioration de la pastille.

On peut prévoir de coupler la porte 20 et la porte 22 au lieu de la porte 20 et de la porte 18.

De plus, on peut prévoir d'actionner l'une des portes 18, 22 par le vérin et de la coupler à la porte 20 de manière similaire à celle décrite précédemment.

En outre, il est possible de prévoir plus de trois portes suivant la longueur du bec de remplissage et de la vitesse maximale souhaitée pour la chute des pastilles le long du bec.

Dans l'exemple représenté sur la figure 2, les bras 36 et 38 comportent sur leur partie centrale un méplat 64, 66 respectivement, coopérant avec une forme adaptée à l'extrémité des bras 50, 54 et permettant la solidarisation en rotation des arbres 36, 38 avec les bras 50, 54.

Dans l'exemple représenté, le chemin d'écoulement 4 est formé par une plaque 70 s'étendant du dispositif d'alimentation jusqu'à la bavette et de manière avantageuse. La plaque 70 comporte également à son extrémité supérieure 72 un élément biseauté 74 permettant de réduire là distance de chute de la pastille du moyen d'alimentation à la plaque 70. La plaque peut être réalisée en un matériau amortissant les chocs, tel qu'un élastomère.

Dans l'exemple représenté, les portes 18, 20, 22, sont fixées aux arbres 36, 34, 38 respectivement aux moyen de vis permettant ainsi leur remplacement de manière aisée. Pour les bras 36, 38, les portes 18, 22 sont fixées au niveau du méplat central 64, 66.

La bavette 14 a sensiblement une forme rectangulaire fixée, comme il a été décrit plus haut, par une extrémité supérieure 76 à l'extrémité inférieure 12 du chemin d'écoulement 4, en particulier à la plaque 70. La bavette est avantageusement fixée par un système de vis, ce qui permet également son remplacement.

Il est également prévu de manière avantageuse que le dispositif d'alimentation comporte des moyens pour déplacer la nacelle relativement au bec d'alimentation, en particulier par rapport à l'extrémité inférieure du bec d'alimentation, pour permettre une répartition homogène des pastilles notamment sous forme de couches. Par exemple, la nacelle peut être disposée sur un tapis roulant ou des rouleaux et ce tapis roulant ou ces rouleaux sont actionnés en association avec le niveau d'avancement du remplissage de la nacelle afin de répartir uniformément les pastilles dans la nacelle.

Comme il a été décrit précédemment, le bec de remplissage peut avoir plusieurs positions verticales, pour cela il est mobile en rotation autour d'un axe X, ce qui permet de disposer l'extrémité inférieure du bec de remplissage au plus près de l'endroit où la pastille doit être disposée dans la nacelle.

Il peut donc être prévu de modifier la position inférieure du bec lorsque qu'une ou plusieurs couches de pastilles ont été déposées dans la nacelle,

Nous allons maintenant expliquer le remplissage d'une nacelle à l'aide du dispositif de remplissage selon la présente invention.

Les pastilles sont amenées à l'entrée du bec de remplissage par au moins un convoyeur ; lors de leur convoyage, des contrôles qualitatifs peuvent être réalisés. Les pastilles sont alors déversées dans le premier niveau I, puis le vérin est actionné, ce qui permet le pivotement de la porte 18 et son ouverture et la fermeture de la porte 20, la pastille passe alors du niveau I au niveau II. Ensuite, le vérin est de nouveau actionné pour ouvrir la porte 20, simultanément la porte 18 se ferme, de même que la porte 22, la pastille se trouve alors dans le niveau III. Ensuite, le vérin est une nouvelle fois actionné pour fermer la porte 20 et ouvrir la porte 22, la pastille passe alors dans le quatrième niveau IV, glisse sur la bavette et se retrouve dans la nacelle.

Nous venons de décrire le cheminement pour la première pastille mise en place dans le bec de remplissage, ensuite d'autres pastilles sont amenées par le convoyeur 1 et sont disposées dans le premier niveau, les pastilles se suivent alors dans les différents niveaux et le remplissage de la nacelle s'effectue en continu.

De manière avantageuse selon la présente invention, une seule pastille ou une seule rangée de pastilles est contenue dans les différents niveaux ce qui évite les chocs entre pastilles.

Nous allons maintenant décrire un procédé de remplissage mettant en oeuvre le dispositif de la présente invention

Le procédé de remplissage selon la présente invention, comporte les étapes :
- de mise en place de l'extrémité inférieure du bec au plus près du fond de la nacelle,
- d'alimentation du bec de remplissage avec des pastilles,
- d'actionnement alternatif des portes,
- de relèvement de l'extrémité inférieure du bec en fonction de l'épaisseur des pastilles disposées dans la nacelle.

Nous allons décrire de manière détaillée ce procédé.

Lorsqu'une nacelle est prête à être remplie, le bec de remplissage s'abaisse pour venir placer l'extrémité inférieure du bec au plus près du fond de la nacelle ; la bavette est également placée dans la nacelle.

Ensuite, les moyens d'acheminement des pastilles sont actionnés pour alimenter le bec de remplissage, une pastilles ou une rangée de pastilles est amenée à la fois.

De manière avantageuse, la nacelle est déplacée pendant le remplissage de manière à assurer un remplissage sensiblement en couche ayant comme épaisseur une pastille.

Lorsqu'une couche est terminée, la nacelle reprend une position initiale pour permettre la mise en place d'une autre couche. L'extrémité du bec peut se relever ou non suivant le mode de remplissage établi..

Le remplissage d'une nacelle peut suivre le déroulement suivant. Les pastilles peuvent être réparties en six couches dans la nacelle. Pour cela il est prévu une positon minimale de l'extrémité inférieure du bec pour disposer la première couche de pastilles, puis une deuxième position supérieure à la première position pour mettre en place une deuxième couche de pastilles, puis une troisième position supérieure à la deuxième position pour mettre en place deux couches de pastilles et enfin une quatrième position supérieure à la troisième position pour disposer à nouveau deux couches de pastilles.

Il est également possible suivant la taille des nacelles de prévoir plus de six couches ou moins de six couches et il est également possible de prévoir des positions de l'extrémité inférieure du bec de remplissage pour chacune des couches ou pour plus de couches.

## Revendications

1. Dispositif de remplissage de nacelle avec des pastilles de combustible nucléaire comportant un bec de remplissage (2) délimitant un chemin d'écoulement pour les pastilles, le bec (2) comportant une extrémité supérieure (8) destinée à recevoir des pastilles et une extrémité inférieure (12) destinée à être proche d'une nacelle, ledit bec (2) comportant des portes (18, 20, 22) formant obstacle au cheminement des pastilles de manière à fractionner ledit cheminement, lesdites portes (18, 20, 22) pouvant être ouvertes et fermées alternativement, et l'extrémité inférieure (12) du bec étant déplaçable de manière à permettre son rapprochement et son éloignement d' un fond de la nacelle, ledit dispositif comportant au moins une première, une deuxième et une troisième porte disposées les unes derrières les autres le long de la direction d'écoulement, dans lequel simultanément la première et la troisième porte sont dans le même état d'ouverture ou de fermeture, et la deuxième porte est dans un étant de fermeture ou d'ouverture respectivement.

2. Dispositif selon la revendication 1, dans lequel les portes sont actionnables alternativement.

3. Dispositif selon la revendication 1 ou 2, comportant un moyen d' actionnement unique (26) desdites portes.

4. Dispositif selon la revendication 3, dans lequel le moyen d'actionnement comporte un vérin lié à la deuxième porte (20) par un moyen de bielle (30).

5. Dispositif selon la revendication 4, dans lequel les première (18) et troisième (22) portes sont reliées par une barre d'accouplement (48) et une des première (18) et troisième (22) portes est connectée par un moyen d'engrenage (42) à la deuxième porte (20).

6. Dispositif selon l'une quelconque des revendications précédentes, dans lequel les portes (18, 20, 22) sont de formes sensiblement rectangulaire et comportent des franges du côté d'un fond du bec.

7. Dispositif selon l'une quelconque des revendications précédentes, dans lequel les portes (18, 20, 22) sont réalisées en polyuréthane.

8. Dispositif selon l'une quelconque des revendications précédentes, comportant une bavette (14) souple à l'extrémité inférieure du bec.

9. Dispositif selon la revendication précédente, dans lequel la bavette (14) est réalisée en matériau silicone.

10. Dispositif selon l'une quelconque des revendications précédentes, comportant un moyen d'alimentation en pastilles formé par un tapis roulant.

11. Dispositif selon l'une quelconque des revendications précédentes, comportant des moyens de déplacement de la nacelle relativement à l'extrémité inférieure du bec.

12. Procédé de remplissage mettant en oeuvre un dispositif selon l'une quelconque des revendications précédentes, comportant
- la mise en place de l'extrémité inférieure (12) du bec (2) au plus près du fond de la nacelle,
- la mise en route du moyen d'alimentation en pastilles,
- l'actionnement alternatif des portes (18, 20, 22),
- le relèvement de l'extrémité inférieure (12) du bec (2) en fonction de l'épaisseur des pastilles disposées dans la nacelle.

13. Procédé selon la revendication précédente, dans lequel la nacelle est déplacée pendant le remplissage de manière à assurer un remplissage sensiblement en couche.

14. Procédé selon la revendication 12 ou 13, dans lequel :
- une première couche de pastilles est réalisée à une position minimale de l'extrémité inférieure du bec,
- une deuxième couche de pastilles est réalisée à une position supérieure à la position minimale,
- une troisième et une quatrième couche sont réalisées à une position encore supérieure,
- une cinquième et une sixième couche sont réalisées à une position encore supérieure.

## Claims

1. Device to load a sintering boat with nuclear fuel pellets, comprising a loading chute delimiting a travel pathway for the pellets, the loading chute having an upper end intended to receive pellets and a lower end intended to lie close to a sintering boat, said loading chute comprising gates forming an obstacle in the travel pathway of the pellets so as to fractionate said pathway, said gates able to be opened and closed alternately, and the lower end of the loading chute being movable so that it can be drawn close to and away from a bottom part of the sintering boat, said device including at least a first, a second and an third gates located one behind the other aligned with the travel direction, in which the first and the third gates are simultaneously in an open or closed position, and the second gate is in a closed or open position, respectively.

2. Device according to claim 1, wherein the gates can be actuated alternately.

3. Device according to claim 1, comprising a single actuator for said gates.

4. Device according to claim 3, wherein the actuator comprises a cylinder linked to the second gate by connecting rod means.

5. Device according to claim 4, wherein the first and third gates are connected via a coupling bar and one of either the first gate or third gate is connected via gear means to the second gate.

6. Device according to one of the preceding claims, wherein the gates (18, 20, 22) are of substantially rectangular shape and comprise fringes on the side of a bottom part of the loading chute.

7. Device according to one of the preceding claims, wherein the gates are made in polyurethane.

8. Device according to one of the preceding claims, comprising a flexible flap at the lower end of the loading chute.

9. Device according to the preceding claim, wherein the flap is made in a silicone material.

10. Device according to one of the preceding claims, including a pellet feed means which is a conveyor belt.

11. Device according to one of the preceding claims, comprising means to move the sintering boat relative to the lower end of the loading chute.

12. Loading method using a device to one of the preceding claims, comprising the steps consisting of:
- positioning the lower end of the loading head close to the bottom part of the sintering boat,
- setting in operation the pellet feed means,
- actuating the gates alternately,
- lifting the lower end of the loading chute in relation to the thickness of the pellets arranged in the sintering boat.

13. Method according to the preceding claim, wherein the sintering boat is moved during loading so as to ensure loading substantially in layers.

14. Method according to claim 12 or 13, wherein:
a first layer of pellets is deposited with the lower end of the loading chute at a minimal position,
- a second layer of pellets is deposited at a position higher than the minimal position,
- a third and fourth layer are deposited at an even higher position,
a fifth and sixth layer are deposited at an even higher position.

## Patentansprüche

1. Vorrichtung zum Befüllen eines Schiffchens mit Brennstoffpellets, die einen Füllschacht (2) umfasst, der einen Ablaufweg für die Pellet begrenzt, wobei der Schacht (2) ein oberes Ende (8), das Pellets aufnehmen soll, und ein unteres Ende (12), das nahe einem Schiffchen sein soll, umfasst, wobei der Schacht (2) Türen (18, 20, 22) umfasst, die ein Hindernis im Weg der Pellets bildern, so dass dieser Weg unterteilt wirt, wobei diese Türen (18, 20, 22) abwechselnd geöffnet und geschlossen sein können, und das untere Ende (12) des Schachts verschiebbar ist, so dass dessen Annäherung und dessen Wegführung von einem Boden des Schiffchens ermöglicht wird., wobei diese Vorrichtung mindestens eine erste, eine zweite und eine dritte Tür umfasst, die hintereinander längs der Allaufrichtung angeordnet sind, in der die erste und die dritte Tür sich gleichzeitig im selben Öffnungs- oder Schließzustand befinden und die zweite Tür sich in einem Schließ- bzw. Öffnungszustand befindet.

2. Vorrichtung nach Anspruch 1, in der die Türen abwechselnd betätigt werden können.

3. Vorrichtung nach Anspruch 1 oder 2, die ein einziges Mittel (26) zur Betätigung der Türen umfasst

4. Vorrichtung nach Anspruch 3, in der das Betätigungsmittel einen Kolben umfasst, der mittels eines Pleuelsiangennlittels (30) mit der zweiten Tür (20) verbunden ist. fit der mittleren Tür (20) verbunden ist.

5. Vorrichtung nach Anspruch 4, in der die erst Tür (18) und die dritte Tür (22) mittels einer Kupplungsstange (48) verbunden sind und eine der erste Tür (18) und der dritte Tür (22) mittels eines Zahnradgetriebemlttels, (42) mit der zweiten Tür (20) verbunden ist.

6. Vorrichtung nach einem der vorhergehenden Ansprüche, in der die Türen (18, 20, 22) eine im Wesentlichen rechteckige Form aufweisen und Ränder an der Seite eines Bodens des Schachts umfassen.

7. Vorrichtung nach einem der vorhergehenden Ansprüche, in der die Türen (18, 20, 22) aus Polyurethan hergestellt sind.

8. Vorrichtung nach einem der vorhergehenden Ansprüche, die am unteren Ende des Schachts einen flexiblen Schmutzfänger (14) umfasst.

9. Vorrichtung nach dem vorhergehenden Anspruch, in der der Schmutzfänger (14) aus Silikonmaterial hergestellt ist.

10. Vorrichtung nach einem der vorhergehenden Ansprüche, ein Mittel zur Zuführung von pellets umfasst, das ein Förderband ist.

11. Vorrichtung nach einem der vorhergehenden Ansprüche, die Mittel zur Verlagerung des Schiffchens in Bezug auf das untere Ende des Schachts umfasst.

12. Befüllverfahren zum einsetzen einer Vorrichtung nach einem der vorhergehenden Ansprüche, wobei das Verfahren Folgende umfasst:
- das Anordnen des unteren Endes (12) des Schachts (2) näher am Boden des Schiffchens,
- das Einschalten des Mittels zur Zuführung von Pellets,
- das abwechselnde Betätigen der Türen (18, 20, 22),
- das Anheben des unteren Endes (12) des Schachts (2) in Abhängigkeit von der Höhe der Pellet, die sich in dem Schiffchen befinden.

13. Verfahren nach dem vorhergehenden Anspruch, in dem das Schiffchen während des Befüllens verlagert wird, um eine im Wesentlichen in Lagen erfolgende Befüllung sicherzustellen.

14. Verfahren nach Anspruch 12 oder 13, in dem:
eine erste Lage der Pellets in einer tiefen Position des unteren Endes des Schachts umgesetzt wird,
eine zweite Lage der Pellet in einer Postition umgesetzt wird, die höher als die tiefe Position liegt,
eine dritte und eine vierte Lage in einer noch höheren Position umgesetzt werden,
eine fünfte und eine sechste Lage in einer noch höheren Position umgesetzt werden.
